# EUROPÄISCHE PATENTSCHRIFT

(11) **EP 3 964 164 B1**
(45) Veröffentlichungstag und Bekanntmachung des Hinweises auf die Patenterteilung: **03.12.2025**
(21) Anmeldenummer: 20194147.3
(22) Anmeldetag: 02.09.2020
(51) Int. Cl.: A61C 13/00

(54) **VERFAHREN ZUR ERZEUGUNG EINER DENTALPROTHESE, ROHLING SOWIE DENTALPROTHESE**
METHOD FOR PRODUCING A DENTAL PROSTHESIS, BLANK, AND DENTAL PROSTHESIS
PROCÉDÉ DE FABRICATION D'UNE PROTHÈSE DENTAIRE, ÉBAUCHE AINSI QUE PROTHÈSE DENTAIRE

(43) Veröffentlichungstag der Anmeldung: 09.03.2022
(73) Patentinhaber: Ivoclar Vivadent AG, 9494 Schaan (LI)
(72) Erfinder: HÄFELE, Clemens Andreas, 6800 Feldkirch (AT); FREI, Roger, 9435 Heerbrugg (CH); HAGENBUCH, Konrad, 9469 Haag (CH); GEIER, Markus, 39010 Tisens (IT); FRENZEL, Frank, 79618 Rheinfelden (DE)
(74) Vertreter: Baldus, Oliver

(56) Entgegenhaltungen:
- EP-A1- 3 064 170
- EP-A1- 3 597 143
- WO-A2-2013/068124
- DE-A1- 102005 031 249
- US-A1- 2013 101 962
- US-A1- 2018 280 123

## Beschreibung

Die vorliegende Erfindung betrifft ein Verfahren zur Erzeugung einer Dentalprothese aus einem Rohling, gemäß dem Oberbegriff von Anspruch 1, ein Rohling für die Herstellung einer Dentalprothese, gemäß dem Oberbegriff von Anspruch 2, sowie eine Dentalprothese, gemäß dem Oberbegriff von Anspruch 7.

Bei der Herstellung von Denallprothesen wird typischerweise darauf geachtet, dass die Formgebung der Dentalprothese so gewählt ist, dass ein möglichst geringes Störungsempfinden beim Patienten vorliegt. Der Patient soll sprechen, schlucken und kauen können, als hätte er noch seine natürlichen Zähne. Für eine derartige Dentalprothese ist zum einen eine gute Materialverträglichkeit und zum anderen eine schlanke Gestaltungen der Prothese wünschenswert.

Um eine sichere Verankerung der Zähne in der Dentalprothese zu gewährleisten, werden diese typischerweise geklebt oder aber auch in einem Spritzgussverfahren eingebracht.

Eine diesbezügliche Lösung ist aus der DE 837 288 B1 ersichtlich.

Diese Lösung hat sich nicht durchgesetzt, da eine komplizierte Formgebung der Zähne erforderlich war und für das Spritzgießen spezielle Spritzgusswerkzeuge mit Schiebern zum Einsatz gelangen mussten, die teuer zu fertigen waren, insbesondere, wenn Werkzeuge für unterschiedliche Zahnformen bereitgestellt werden mussten.

Zur Bereitstellung einer intensiven Verbindung zwischen Zähnen und Prothesenbasis ist es auch bekannt geworden, auf das Heißpolymerisierverfahren zurückzugreifen. Ein Beispiel hierfür ist die aus der DE 20 21 194 A1 bekannte Lösung.

Derartige Lösungen sind heutzutage nicht besonders weit verbreitet, zumal heißpolymerisierte Prothesen offenbar vergleichsweise leicht dazu neigen, zu brechen. Aus der EP3064170A1 sind ein Rohling, eine Dentalprothese und ein Verfahren zur Herstellung einer Dentalprothese bekannt.

Es ist seit längerem bekannt geworden, Prothesen aus Metall-Kunststoff-Konstruktionen mit einer verbesserten Stabilität herzustellen.

Bei implantatgetragenen Prothesen sind beispielsweise Stege bekannt geworden, die auf den Implantaten verankert sind und die Lagerung für sogenannte Überwürfe bilden, die mit dem Prothesenbasismaterial verbunden sind.

Im Bereich des Überwurfs sind derartige Prothesen zwar besonders stabil.

Typischerweise enden die Überwürfe an Stellen, an denen auch die Stege enden.

Prothesen brechen dann gerne genau an diesen Stellen.

Ferner sind auch Prothesen mit anderen Metall-Gerüsten bekannt geworden, auch mit Geschieben, Metallankern und Teleskopen.

Derartige Lösungen erstrecken sich meist entlang des Zahnbogens der Prothese, wobei das metallische Gerüst von Prothesenmaterial umgeben ist.

Typischerweise sind derartige Prothesen zwar vergleichsweise stabil, aber auch schwer und dicker, so dass sie vom Patienten häufig als unangenehm empfunden werden.

Demgegenüber liegt der Erfindung die Aufgabe zugrunde, ein Verfahren zur Erzeugung einer Dentalprothese aus einem Rohling gemäß dem Oberbegriff von Anspruch 1, ein Rohling für die Herstellung einer Dentalprothese, gemäß dem Oberbegriff von Anspruch 2 sowie eine Dentalprothese gemäß dem Oberbegriff von Anspruch 7 zu schaffen, die bei einer guten Mund-Kompatibilität und Akzeptanz eine lange Haltbarkeit bei vergleichsweise sehr günstiger Fertigung ermöglicht.

Diese Aufgabe wird erfindungsgemäß durch die Ansprüche 1, 2 und 7 gelöst.

Vorteilhafte Weiterbildungen ergeben sich aus den Unteransprüchen.

Erfindungsgemäß ist es vorgesehen, eine Dentalprothese herzustellen, die aus einem besonderen Rohling gefertigt wird. Der Rohlinge weist Zahnmaterial und Basismaterial auf, die in einer Wellenform miteinander verbunden sind. Die Welle der Wellenform erstreckt sich entlang des Außenumfangs des Zahnbogens und/oder des Rohlings.

Überraschend ergibt ein derartiger Rohling, aus dem eine Prothese mittels eines abtragenden Verfahrens, beispielsweise mittels Fräsens, hergestellt wird, eine verbesserte Grundstabilität und Steifheit. Offenbar ergibt der wellenförmige Rot/Weiß-Übergang eine besonders gute Formstabilität. Das Zahnmaterial und das Basismaterial sind entlang der Grenzfläche, die ebenfalls wellenförmig oder muschelförmig ausgebildet ist, aneinander anpolymerisiert.

Erfindungsgemäß ist das Basismaterial mit Ausnehmungen versehen, in welche Retentionen einbringbar sind. Die Retentionen dienen der Lagerung und Befestigung der Prothese, beispielsweise auf Implantaten oder auch auf Pfeilerzähnen oder Zahnstümpfen.

Erfindungsgemäß durchtreten die Ausnehmungen die Grenzfläche.

Die Retentionen erstrecken sich dann bis in das Zahnmaterial hinein. Dort sind die Retentionen sicher verankert. Diese Verankerung erfolgt zusätzlich zur Verankerung im Basismaterial.

Erfindungsgemäß günstig ist es, dass zwischen den beiden Materialschichten, also Zahnmaterial und Basismaterial, keine dritte Schicht besteht. Herkömmlicherweise wäre dies eine Schicht aus Klebstoff, die aber erfindungsgemäß vermieden wird.

Vielmehr werden beide Materialien unter Druck- und Hitze-Einwirkung aneinander anpolymerisiert, so dass ein direkter chemischer Verbund der beiden Materialien vorliegt. Dieser begünstigt den Abbau von Kraftspitzen.

Überraschend ergibt sich durch den Verzicht auf diese Übergangsschicht in Verbindung mit der dreidimensionalen Ausgestaltung der Grenzfläche eine verbesserte Haltbarkeit und Festigkeit.

Für beide Materialien ist PMMA bevorzugt, für das Zahnmaterial besonders DCL-Material.

Erfindungsgemäß durchtritt die Ausnehmung die Grenzfläche schräg. Dann ist auf der Höhe der Grenzfläche typischerweise sowohl Zahnmaterial als auch Basismaterial vorhanden. An einer Stelle erstreckt sich dann das Basismaterial bezogen auf die Ausnehmung und die Retention radial außerhalb des Zahnmaterials. Die Mindestwandstärke für die sichere Lagerung des Locators oder der Retention in der Prothesenbasis kann dann eingehalten werden, auch wenn z.B. das Zahnmaterial alleine oder das Basismaterial alleine diese unterschreiten würden.

Während bei herkömmlichen Dentalprothesen dann Material aufgetragen würde, um die Mindestwandstärke von beispielsweise 2 mm einzuhalten, ist dies erfindungsgemäß nicht erforderlich.

Durch die in gingival/okklusaler Richtung vergleichsweise große Verbindungslänge zwischen Retention und Ausnehmung entsteht eine vergleichsweise geringe Materialbelastung im Prothesenmaterial und auch eine geringe Flächenpressung des Prothesenmaterials aufgrund der Kaukräfte. Dies begünstigt eine lange Lebensdauer, insbesondere auch in Verbindung mit dem Verzicht auf Steifigkeitssprünge durch sich medial/distal erstreckende Gerüste aus Metall.

Die Retention ist je in der zugehörigen Ausnehmung befestigt, vorzugsweise eingeklebt. Sie kann aber dort auch einpolymerisiert oder in anderer Weise befestigt sein, beispielsweise eingeschraubt sein. Die Ausnehmung ist nach gingival offen und nach der Art eines Sacklochs nach okklusal geschlossen.

Erfindungsgemäß der Stabilität zugute kommt auch die Tatsache, dass das Zahnmaterial einen einstückigen Zahnbogen bildet. Dieser hat in sich eine erheblich größere Stabilität als Einzelzähne. Diese Stabilität kommt der Bruchsicherheit zugute.

Erfindungsgemäß wird die Lage und Anordnung der Ausnehmungen für die Lokatoren oder Retentionen zunächst vorab im CAD festgelegt. Hierbei lässt sich die Mindestwandstärke, gegebenenfalls aus der Kombination des Zahnmaterials mit dem Basismaterial, als Randbedingung festlegen.

Gegebenenfalls kann auch die Festigkeit und Eignung des Kieferknochens an der betreffenden Stelle, an der das Implantat gesetzt wird, in die Festigkeits-Überlegungen und -Berechnungen einbezogen werden. Es kann auch die Lage des Implantats in vestibulär-oraler Richtung vorab optimiert werden, was der Dauerhaltbarkeit des Implantat und damit letztlich der der Prothese zugutekommt.

Die Erfindung ist nicht auf festsitzende oder lösbare Prothesen beschränkt. Auch die Art der Lagerung, also implantatgetragen, stumpfgetragen oder Hybridprothese ist erfindungsgemäß nicht festgelegt; die Erfindung ist vielmehr bei allen Arten von Prothesen anwendbar.

In modifizierter Ausgestaltung ist es vorgesehen, als Zahnmaterial Zirkonoxid zu wählen.

Alternativ kann auch der gesamte Rohling aus Zahnmaterial und Basismaterial unter Verwendung von Zirkondioxid realisiert sein.

Zirkondioxid hat eine erhebliche Abrasionsfestigkeit und eignet sich damit besonders für die Realisierung von Zähnen. Es lässt sich auch als Zahnbogen oder als Teilzahnbogen herstellen.

Insbesondere trägt ein derartiger Zahnbogen aus Zirkondioxid erheblich zur Aussteifungen der Prothese bei. Dies ist besonders günstig, denn bei implantatgetragenen Restaurationen sind die Kaubelastungen im Vergleich mit natürlichen Zähnen größer.

In vorteilhafter Ausgestaltung der Erfindung ist es vorgesehen, dass das Basismaterial und das Zahnmaterial aus Zirkondioxid besteht oder aufweist, und dass das oder die Retentionsteil/e in mindestens einer Ausnehmung in dem Rohling/finalisierten Prothese gelagert, insbesondere eingeklebt ist.

In vorteilhafter Ausgestaltung der Erfindung ist es vorgesehen, dass das Zahnmaterial mindestens teilweise auch aus hoch vernetztem PMMA, insbesondere aus DCL-Material besteht, und das Basismaterial aus demgegenüber weniger hoch vernetztem und an dieses anpolymerisiertem PMMA.

Weitere Vorteile und Einzelheiten der Erfindung sind in der nachfolgenden Figurenbeschreibung anhand der Zeichnung näher erläutert.

Es zeigen:
- Fig. 1: einen schematischen Schnitt in oral/vestibulärer Richtung durch einen Teil einer erfindungsgemäß hergestellten Dentalprothese in einer Ausführungsform;
- Fig. 2: einen schematischen Schnitt in distal/mesialer Richtung durch einen Teil einer erfindungsgemäß hergestellten Dentalprothese in einer Ausführungsform;
- Fig. 3: einen schematischen Schnitt in oral/vestibulärer Richtung durch einen Teil einer beispielhaften Dentalprothese ;
- Fig. 4: eine schematische perspektivische Ansicht einer modifizierten Ausführungsform der erfindungsgemäß hergestellten Dentalprothese, unter schwerpunktmäßiger Darstellung der Grenzfläche und Weglassung des Zahnmaterials;
- Fig. 4a: ein oral-vestibulär verlaufender Schnitt durch die Prothesenbasis bei der Ausführungsform gemäß Fig. 4, jedoch mit einer modifizierten Krümmungslinie des Wellenkamms;
- Fig. 5: eine schematische perspektivische Ansicht einer weiteren Ausführungsform der erfindungsgemäß hergestellten Dentalprothese; und
- Fig. 6: einen schematischen Schnitt in oral/vestibulärer Richtung durch einen Teil einer erfindungsgemäß hergestellten Dentalprothese in einer anderen Ausführungsform.

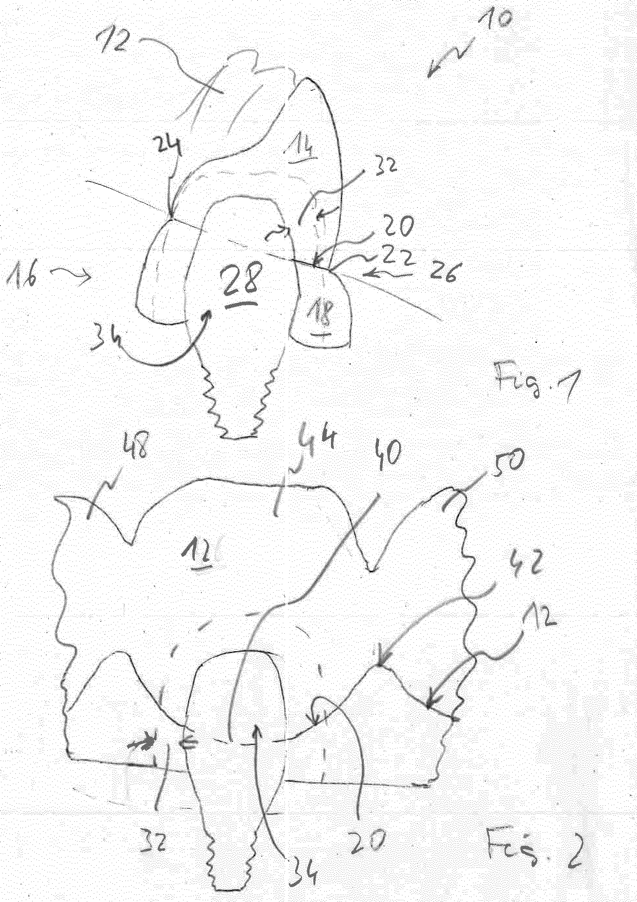

Fig. 1 zeigt schematisiert einen Schnitt durch eine erfindungsgemäße Dentalprothese 10, wobei ein Zahnbogen 12 aus Zahnmaterial 14 und eine Prothesenbasis 16 aus Basismaterial 18 ausgebildet sind. Diese sind an einer Grenzfläche 20 aneinander anpolymerisiert.

Die Dentalprothese 10 ist aus einem bspw. scheibenförmigen Rohling hergestellt. In diesem verläuft die Grenzfläche 20 wellenförmig, mit einer an dem Außenumfang entlang verlaufenden Welle.

Die Welle der Grenzfläche 20 weist - entlang Ihres dem Gingivasaum entsprechenden Außenumfangs betrachtet - abwechselnd Wellentäler und Wellenkämme auf und verläuft bevorzugt nach der Art einer Kettenlinie, wie es in Fig. 2 dargestellt ist. In vestibulär-oraler Richtung betrachtet verläuft sie strahlenförmig, also sich nach vestibulär, also radial nach außen, sich aufweitend.

Gemäß Fig. 1 verläuft die Grenzfläche in radialer Richtung betrachtet gerade.

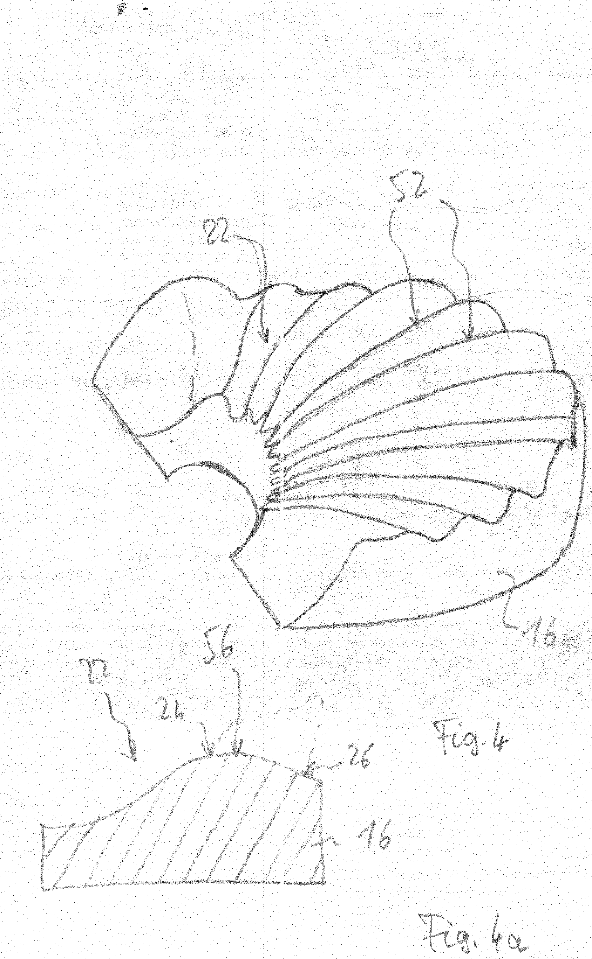

Gemäß eine modifizierten Ausgestaltung ist es aber auch möglich, der Grenzfläche einen gekrümmten Verlauf in radialer Richtung zu geben, vgl. Fig. 4. In diesem Fall weiten sich die die Wellenkämme und Wellentäler radial nach außen auf, aber erstrecken sich nicht strahlenförmig, sondern dreidimensional strukturiert.

Wie aus Fig. 1 ersichtlich ist, besteht am Übergang zwischen den Materialien 14 und 18 sowohl oral als auch vestibulär Einschnürungen 22 und 24. Dies bilden den Gingivasaum 26, an der Stelle des Materialübergangs der beiden Materialien 14 und 18, die bevorzugt aneinander anpolymerisiert sind.

An der Stelle gemäß Fig. 1 ist die Prothese 10 mit einem Retentionsteil 28 abgestützt. Dieses ist in den Figuren der Einfachheit halber einstückig mit der zugehörgen Implantatschraube und einem Innenteleskop dargestellt. In der Praxis liegen insofern für gewöhnlich 3 Teile vor. Als Retentionsteil 28 kann ein Teleskop, aber z.B. auch ein Locator, ein Kugelanker, eine Konuskrone oder ein beliebiges anderes Retentionsteil verwendet werden.

Das Retentionsteil 28 ist in die Prothese 10 einpolymerisiert. Es durchtritt die Grenzfläche 20.

Bei Entwurf der Prothese 10 mittels einer CAD/CAM-Vorrichtung 30 liegt die Grenzfläche 20 virtuell vor. Ferner ist materialabhängig eine Mindestwandstärke 32 festgelegt. Diese ist der Deutlichkeit halber in den Figuren eingezeichnet, obwohl sie tatsächlich lediglich in der CAD/CAM-Vorrichtung 30 vorliegt. Gemäß Fig. 1 ist das Design so, dass die Mindestwandstärke 32 sich sowohl im Zahnmaterial 14 als auch im Basismaterial 18 erstreckt und weder da noch dort unterschritten wird. Durch das Anpolymerisieren und die Wellenform verstärken die Materialien 14 und 18 einander, so dass es für die Stabilität der Prothese 10 auch ausreicht, wenn die Mindestwandstärke 32 teilweise gerade so eingehalten wird, hier bei der Einschnürung 24.

Mittels des vorliegenden einteiligen Rohling mit dessen innerer Wellengeometrie ist es möglich, eine relativ geringe Wandstärke des Basismaterials oder des Zahnmaterials durch Zuhilfenahme des anderen Materialbereichs zu kompensieren, um dennoch die erforderlichen Mindestwandstärken zu erreichen.

Verglichen zu einer zweiteiligen Prothese, die mittels Fräsen/Drucken einer separaten Prothesenbasis und eines separaten Zahnbogens hergestellt ist, ist erfindungsgemäß keine separate Betrachtung der Stabilität der einzelnen Teile/Systeme erforderlich. Hierdurch wird die Rechenzeit reduziert und Anpassungen im CAD lassen sich beschleunigen, obwohl die Stabilitätssicherheit der Prothese gewährleistet ist.

Es sind mindestens 2 Retentionsteile 28 über den Verlauf der Dentalprothese 10 vorgesehen. Diese sind je in einer Ausnehmung 34 aufgenommen, die sich nach gingival offen erstreckt und die Grenzfläche 20 durchtritt.

Bevorzugt sind die Ausnehmungen 34 je unter dem hinteren Prämolaren vorgesehen, wenn es zwei sind. Distal ist in an sich bekannter Weise eine löffelartige Zahnfleischauflage ausgebildet, die der weiteren Abstützung dient.

Die genaue Lage und Ausrichtung der Retentionsteile 28 oder von entsprechenden Abutments lässt sich in weiten Bereichen an die Erfordernisse anpassen.

Gemäß Fig. 2 ist es vorgesehen, dass die Ausnehmung 34 an einem Wellental 40 realisiert ist. An dieser Stelle reicht das Zahnmaterial 14 besonders weit nach gingival, so dass die Verankerung dort besonders gut und stabil ist, insbesondere, wenn hierfür DCL-Material verwendet wird.

Der Prämolar 44 über der Ausnehmung 34 und dem Retentionsteil 28 ist Teil des Zahnbogens 12, zu dem mindestens auch dessen Nachbarzähne 48 und 50 gehören.

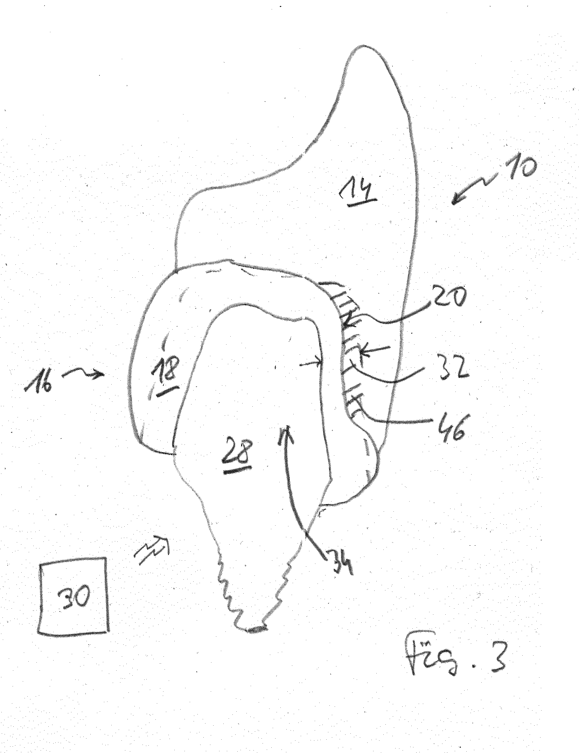

Gemäß beispielhaft beigefügten Fig. 3 ist im schraffierten Bereich 46 ersichtlich, dass dort die Mindestwandstärke 32 durch das Basismaterial 18 alleine rechnerisch nicht eingehalten würde. Dort ist jedoch das Zahnmaterial 14 ausserhalb des Basismaterials vorgesehen, und stützt es in ausreichendem Maße ab.

Aus Fig. 4 ist der Verlauf der Grenzfläche 22 bei einer modifizierten Ausführungsform der Erfindung ersichtlich.

In oral-vestibulärer Richtung verläuft die Grenzfläche 22 gekrümmt und entlang des Aussenumfang der Prothesenbasis 16 betrachtet wellenförmig.

Bevorzugt ist die Krümmung so gewählt, dass der Verlauf der Wellenkämme 52 radial außen sich der Horizontalen annähert, und radial innen stärker von der Horizontalen divergiert.

Wenn eine kleinere Prothese hergestellt werden soll, liegt so auch bei dieser außen ein im wesentlichen horizontaler Wellenkamm 52 vor. Dennoch kann mehr preisgünstiges Basismaterial 18 und weniger teureres DCL-Material beim Rohling verwendet werden.

In ästhetisch anspruchsvolleren Konstellationen ist es günstig, wenn die Grenzfläche 22 am vestibulären Gingivasaum 26 - beim Unterkiefer - etwas unterhalb des oralen Givigasaums 24 zu liegen kommt. Dies gilt insbesondere für ältere Patienten mit Zahnfleischschwund.

Dieser Form der Grenzfläsche kann dadurch Rechnung getragen werden, dass man gemäß Fig. 4a den Scheitelpunkt 56 des Wellenkamms 52 nach radial einwärts, also nach links in Fig. 4a, verlagert. Es kann auch eine liegende S-Form des Grenzflächenverlaufs am Wellenkamm 52 gemäß Fig. 4a vorgesehen sein.

Es versteht sich, dass bei den Ausführungsformen der Fig. 4 und 4a die Wellentäler den Wellenkämmen 52 folgen. Die Wellenamplitude in Umfangsrichtung betrachtet bleibt also im wesentlichen gleich.

Alternativ ist es auch möglich, diese Amplitude radial einwärts geringer und radial auswärts größer, entsprechend der menschlichen Gingivasaum-Amplitude, auszugestalten.

Mit dieser Lösung lässt sich auch eine automatische Anpassung an natürliche Gegebenheiten sicherstellen, da bei einer kleineren Prothese eine kleinere - vestibuläre -Gingivasaum-Amplitude harmonischer wirkt.

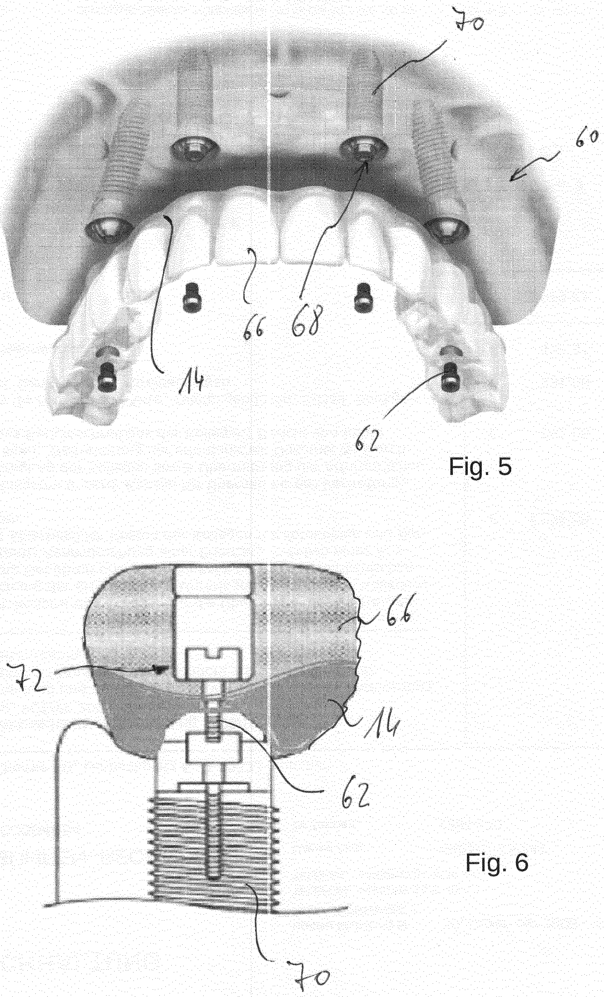

Aus Fig. 5 ist ein weiteres Ausführungsbeispiel der Erfindung ersichtlich. Es ist je eine Verschraubung 60 mit Schrauben 62 vorgesehen. Es ist ein Zahnbogen 66 vorgesehen Jede Schraube 62 durchtritt den Zahnbogen 66 und die Prothesenbasis 14 und steht im Gewindeingriff mit einem Innengewinde 68 in einem Implantatkörper 70, der im Kiefer des Patienten verankert ist. Die Schrauben 62 dienen damit die Befestigung der Prothese am Kiefer des Patienten.

Hier handelt es sich um ein Multiunitsystem. Alternativ ist es auch möglich, dass die Schraube direkt im Implantat oder Abutment eingreift bzw. befestigt wird.

Es könnte hier auch auf der Basalseite die Implantatschnittstellengeometrie mit erstellt werden, damit die Schraube als einziges Befestigungselement vorgesehen ist.

Ein schematischer Schnitt durch eine derartige Lösung ist aus Fig. 6 ersichtlich. Ein Schraubenkopf 72 der Schraube 60 liegt in an sich bekannter Weise am Zahnbogen 66 auf.

## Patentansprüche

1. Verfahren zur Erzeugung einer Dentalprothese (10) aus einem Rohling, unter Verwendung einer CAD/CAM-Vorrichtung (30), wobei der Rohling teils aus Basismaterial (18) und teils aus Zahnmaterial (14) besteht, mit einer Grenzfläche (20) zwischen diesen Materialien, die in Form einer Welle ausgebildet ist, deren Wellenkämme (52) und Wellentäler (40) entlang des Außenumfangs des Rohlings einander abwechseln, wobei der Scheitel jedes Wellenkamms (52) einen radialen Verlauf bezogen auf den Rohling hat, **dadurch gekennzeichnet, dass** die CAD/CAM-Vorrichtung (30) die Lage eines zur Befestigung der Prothese (10) auf dem Kieferkamm eines Patienten dienenden Retentionsteils (28), in der Prothese (10) so festlegt, dass die Grenzfläche (20) von diesem durchtreten wird, und dass das Retentionsteil (28) befestigt wird und die Vorrichtung (30) eine Mindestwandstärke (32) der Dentalprothese (10) um das Retentionsteil (28) als Parameter für die Festlegung der Position dieser in der Prothese (10) verwendet.

2. Rohling in Form einer Scheibe für die Herstellung einer Dentalprothese (10), der teils aus Basismaterial (18) und teils aus Zahnmaterial (14) besteht, wobei Basismaterial (18) und Zahnmaterial (14) miteinander verbunden sind, mit einer Grenzfläche (20) zwischen diesen Materialien, die in Form einer Welle ausgebildet ist, deren Wellenkämme (52) und Wellentäler (40) entlang des Außenumfangs des Rohlings einander abwechseln, , wobei der Scheitel jedes Wellenkamms (52) einen radialen Verlauf bezogen auf die Scheibe hat, **dadurch gekennzeichnet, dass** in dem Basismaterial (18) und Zahnmaterial (14) mindestens zwei Ausnehmungen ausgebildet sind, in denen je ein Retentionsteil (28) eingebracht und befestigt ist und die Grenzfläche (20) von den Ausnehmungen schräg durchtreten wird.

3. Rohling nach Anspruch 2, **dadurch gekennzeichnet, dass** das Basismaterial (18) und/oder das Zahnmaterial (14) aus Zirkondioxid besteht oder aufweist, und dass die Retentionsteile (28) in je einer Ausnehmung in dem Rohling gelagert sind.

4. Rohling nach Anspruch 2 oder 3, **dadurch gekennzeichnet, dass** mindestens eine Ausnehmung das Basismaterial (18) durchtritt und das Retentionsteil (28) an oder in dem Zahnmaterial (14) anliegt oder an diesem gehalten ist.

5. Rohling nach einem der Ansprüche 2, 3 oder 4, **dadurch gekennzeichnet, dass** das Retentionsteil (28) sich von der Ausnehmung nach gingival erstreckt und von dieser oral, vestibulär und okklusal umgeben ist.

6. Rohling nach einem der Ansprüche 2 bis 5, **dadurch gekennzeichnet, dass** das Retentionsteil (28) eine aufgeraute Außenoberfläche, Rillen, eine dreidimensionale Struktur, Durchbrechungen, Vorsprüngen und/oder Vertiefungen aufweist.

7. Dentalprothese (10), mit einer Prothesenbasis und einer Zahnanordnung, die aus einem scheibenförmigen Rohling hergestellt ist, welcher aus Basismaterial (18) und aus Zahnmaterial (14) besteht, zwischen welchen Materialien eine Grenzfläche (20) besteht, die in Form einer Welle ausgebildet ist, deren Wellenkämme (52) und Wellentäler (40) entlang des Außenumfangs der Dentalprothese (10) und der Scheibe einander abwechseln, wobei je der Scheitel eines Wellenkamms (52) einen radialen Verlauf bezogen auf die Scheibe hat, **dadurch gekennzeichnet, dass** in dem Basismaterial (18) der Scheibe mindestens zwei Ausnehmungen vorgesehen sind, in denen je ein Retentionsteil (28) der Dentalprothese gehalten ist, und die Retentionsteile (28) in der Dentalprothese (10) je in einer Ausnehmung aufgenommen sind, die sich nach gingival offen erstreckt und die Grenzfläche (20) von der Ausnehmung schräg durchtreten wird.

8. Dentalprothese (10) nach Anspruch 7, **dadurch gekennzeichnet, dass** das mindestens ein Retentionsteil (28) ein Überwurf eines Steges ist, mittels welchem die Dentalprothese (10) entnehmbar und wieder in den Mund des Patienten einsetzbar und befestigbar ist.

9. Dentalprothese (10) nach Anspruch 7, **dadurch gekennzeichnet, dass** das mindestens eine Retentionsteil (28) ein Außenteleskop ist, das mit einem Innenteleskop verbindbar ist, oder ein Locator ist, mittels welchem die Dentalprothese (10) entnehmbar und wieder in den Mund des Patienten einsetzbar und befestigbar ist.

10. Dentalprothese (10) nach einem der Ansprüche 7 bis 9, **dadurch gekennzeichnet, dass** mindestens je eine Ausnehmung auf jeder Seite der Sagittalebene der Dentalprothese (10) ausgebildet ist.

11. Dentalprothese (10) nach einem der Ansprüche 7 bis 9, **dadurch gekennzeichnet, dass** das Basismaterial (18) dem distalen Ende der Dentalprothese (10) benachbart Auflageflächen ausbildet, deren Flächennormalen nach gingival weisen, welche für die Auflage auf einem Kieferkamm bestimmt sind.

12. Dentalprothese (10) nach einem der Ansprüche 7 bis 11, **dadurch gekennzeichnet, dass** 2 bis 4 Ausnehmungen über den Verlauf eines Zahnbogens der Dentalprothese (10) verteilt ausgebildet sind, die je ein Retentionsteil (28) aufnehmen.

13. Dentalprothese (10) nach einem der Ansprüche 7 bis 12, **dadurch gekennzeichnet, dass** das Zahnmaterial (14) unmittelbaren Kontakt mit dem Retentionsteil (28) hat und dass die Ausnehmung das Basismaterial (18) durchtritt und/oder dass das Retentionsteil sowohl mit dem Basismaterial als auch mit dem Zahnmaterial Kontakt hat und die Ausnehmung je das Basismaterial durchtritt.

14. Dentalprothese (10) nach einem der Ansprüche 7 bis 13, **dadurch gekennzeichnet, dass** die Zähne der Prothese (10) über das Zahnmaterial (14) unter Bildung eines Zahnbogens oder Teilzahnbogens miteinander mindestens teilweise einstückig verbunden sind.

## Claims

1. A method for producing a dental prosthesis (10) from a blank using a CAD/CAM device (30), wherein the blank consists partially of base material (18) and partially of tooth material (14), having a boundary surface (20) between these materials which is configured as a wave, the wave crests (52) and wave valleys (40) of which alternate with each other along the outer periphery of the blank, wherein the peak of each wave crest (52) extends radially with respect to the blank, **characterised in that** the CAD/CAM device (30) fixes the position of a retention part (28), which serves to fasten the prosthesis (10) to the alveolar crest of a patient, in such a way that it passes through the boundary surface (20), and that the retention part (28) is fastened and the device (30) uses a minimum wall thickness (32) of the dental prosthesis (10) around the retention part (28) as a parameter for fixing the position of same in the prosthesis (10).

2. A disc-shaped blank for producing a dental prosthesis (10) which consists partially of base material (18) and partially of tooth material (14), wherein the base material (18) and tooth material (14) are connected to each other, having a boundary surface (20) between these materials which is configured as a wave, the wave crests (52) and wave valleys (40) of which alternate with each other along the outer periphery of the blank, wherein the peak of each wave crest (52) extends radially with respect to the disc, **characterised in that** at least two apertures are configured in the base material (18) and tooth material (14), in which one retention part (28) is introduced and fastened, respectively, and **in that** the apertures pass obliquely through the boundary surface (20).

3. The blank as claimed in claim 2, **characterised in that** the base material (18) and/or the tooth material (14) consists of, or comprises, zirconium dioxide, and that the retention parts (28) are each mounted in one aperture in the blank.

4. The blank as claimed in claim 2 or 3, **characterised in that** at least one aperture passes through the base material (18), and the retention part (28) abuts on or in the tooth material (14) or is held thereon.

5. The blank as claimed in any one of claims 2, 3 or 4, **characterised in that** the retention part (28) extends from the aperture towards the gums and is surrounded thereby in the oral, vestibular and occlusal directions.

6. The blank as claimed in any one of claims 2 to 5, **characterised in that** the retention part (28) comprises a roughened outer surface, grooves, a three-dimensional structure, orifices, protrusions and/or depressions.

7. A dental prosthesis (10), having a prosthesis base and a tooth arrangement, which is produced from a disc-shaped blank which consists of base material (18) and tooth material (14), between which materials a boundary surface (20) exists which is configured as a wave, the wave crests (52) and wave valleys (40) of which alternate with each other along the outer periphery of the dental prosthesis (10) and the disc, wherein each peak of a wave crest (52) extends radially with respect to the disc, **characterised in that** at least two apertures are provided in the base material (18) of the disc, in which one retention part (28) of the dental prosthesis is held, respectively, and **in that** the retention parts (28) are received in the dental prosthesis (10) in one aperture each, which extends in the open gingival direction and **in that** the aperture passes obliquely through the boundary surface (20).

8. The dental prosthesis (10) as claimed in claim 7, **characterised in that** the at least one retention part (28) is a cover of a bar, by means of which the dental prosthesis (10) can be removed and can be reinserted into and fastened in the patient's mouth.

9. The dental prosthesis (10) as claimed in claim 7, **characterised in that** the at least one retention part (28) is an external telescope which can be connected to an internal telescope, or is a locator by means of which the dental prosthesis (10) can be removed and can be reinserted into and fastened in the patient's mouth.

10. The dental prosthesis (10) as claimed in any one of claims 7 to 9, **characterised in that** at least one respective aperture is configured on each side of the sagittal plane of the dental prosthesis (10).

11. The dental prosthesis (10) as claimed in any one of claims 7 to 9, **characterised in that**, adjacent to the distal end of the dental prosthesis (10), the base material (18) forms support surfaces, the surface normals of which point towards the gums, which are intended to be supported by an alveolar crest.

12. The dental prosthesis (10) as claimed in any one of claims 7 to 11, **characterised in that** 2 to 4 apertures are configured, distributed over the course of a dental arch of the dental prosthesis (10), which each receive a retention part (28).

13. The dental prosthesis (10) as claimed in any one of claims 7 to 12, **characterised in that** the tooth material (14) is in direct contact with the retention part (28) and that the aperture passes through the base material (18), and/or that the retention part is in contact both with the base material and also with the tooth material, and that the aperture passes through the base material in each case.

14. The dental prosthesis (10) as claimed in any one of claims 7 to 13, **characterised in that** the teeth of the prosthesis (10) are connected to each other at least partially as one piece by the tooth material (14), forming a dental arch or partial dental arch.

## Revendications

1. Procédé de fabrication d'une prothèse dentaire (10) à partir d'un lingotin, à l'aide d'un dispositif CAO/FAO (30), où le lingotin est constituée en partie d'un matériau de base (18) et en partie d'un matériau dentaire (14), avec une interface (20) entre ces matériaux qui est réalisée sous la forme d'une ondulation dont les crêtes (52) et les creux (40) alternent le long de la périphérie extérieure du lingotin, où le sommet de chaque crête d'onde (52) présente un tracé radial par rapport au lingotin, **caractérisé en ce que** le dispositif CAO/FAO (30) spécifie la position dans la prothèse (10) d'une pièce de rétention (28) servant à fixer la prothèse (10) à la crête maxillaire d'un patient de telle manière que celle-ci traverse l'interface (20), et que la pièce de rétention (28) soit fixée et que le dispositif (30) utilise une épaisseur de paroi minimale (32) de la prothèse dentaire (10) autour de la pièce de rétention (28) comme paramètre pour déterminer la position de cette dernière dans la prothèse (10).

2. Lingotin sous la forme de disque pour la fabrication d'une prothèse dentaire (10), qui est constituée en partie d'un matériau de base (18) et en partie d'un matériau dentaire (14), où le matériau de base (18) et le matériau dentaire (14) sont reliés entre eux, avec une interface (20) entre ces matériaux qui est réalisée sous la forme d'une ondulation dont les crêtes (52) et les creux (40) alternent le long de la périphérie extérieure du lingotin, où le sommet de chaque crête d'onde (52) présente un tracé radial par rapport au disque, **caractérisé en ce qu'**au moins deux évidements sont formés dans le matériau de base (18) et le matériau dentaire (14), dans chacun desquels une pièce de rétention (28) est insérée et fixée, et l'interface (20) est traversée de manière diagonale par les évidements.

3. Lingotin selon la revendication 2, **caractérisé en ce que** le matériau de base (18) et/ou le matériau dentaire (14) sont constitués ou contiennent du dioxyde de zirconium, et que les pièces de rétention (28) sont chacune disposées dans un renfoncement dans le lingotin.

4. Lingotin selon la revendication 2 ou 3, **caractérisée en ce qu'**au moins un évidement traverse le matériau de base (18) et que la pièce de rétention (28) repose sur ou dans le matériau dentaire (14) ou y est maintenue.

5. Lingotin selon l'une des revendications 2, 3 ou 4, **caractérisé en ce que** la pièce de rétention (28) s'étend depuis l'évidement vers la gencive et est entourée par celle-ci au niveau buccal, vestibulaire et occlusal.

6. Lingotin selon l'une des revendications 2 à 5, **caractérisée en ce que** la pièce de rétention (28) présente une surface extérieure rugueuse, des rainures, une structure tridimensionnelle, des perforations, des saillies et/ou des dépressions.

7. Prothèse dentaire (10), comprenant une base de prothèse et un agencement de dents qui est fabriquée à partir d'un lingotin en forme de disque constituée d'un matériau de base (18) et d'un matériau dentaire (14), entre lesquels matériaux se trouve une interface (20) qui est réalisée sous la forme d'une ondulation dont les crêtes (52) et les creux (40) alternent le long de la périphérie extérieure de la prothèse dentaire (10) et du disque, où le sommet de chaque crête d'onde (52) présente un tracé radial par rapport au disque, **caractérisé en ce qu'**au moins deux évidements sont prévus dans le matériau de base (18) du disque, où chacun d'entre eux contient une pièce de rétention (28) de la prothèse dentaire, et les pièces de rétention (28) de la prothèse dentaire (10) sont chacune disposées dans un évidement qui s'étend de manière ouverte vers la gencive et qui traverse de manière diagonale l'interface (20) de l'évidement.

8. Prothèse dentaire (10) selon la revendication 7, **caractérisée en ce qu'**au moins une pièce de rétention (28) est un élément superposé sur une tige au moyen duquel la prothèse dentaire (10) peut être retirée et insérée à nouveau et fixée dans la bouche du patient.

9. Prothèse dentaire (10) selon la revendication 7, **caractérisée en ce que** ladite au moins une pièce de rétention (28) est un télescope externe qui peut être relié à un télescope interne, ou un localisateur, au moyen duquel la prothèse dentaire (10) peut être retirée et insérée à nouveau et fixée dans la bouche du patient.

10. Prothèse dentaire (10) selon l'une des revendications 7 à 9, **caractérisée en ce qu'**au moins un évidement est formé de chaque côté du plan sagittal de la prothèse dentaire (10).

11. Prothèse dentaire (10) selon l'une des revendications 7 à 9, **caractérisée en ce que** le matériau de base (18) forme, à proximité de l'extrémité distale de la prothèse dentaire (10), des surfaces d'appui dont les normales sont orientées vers la gencive et qui sont destinées à s'appuyer sur une crête maxillaire.

12. Prothèse dentaire (10) selon l'une des revendications 7 à 11, **caractérisée en ce que** 2 à 4 évidements sont répartis sur le parcours d'une arcade dentaire de la prothèse dentaire (10), dont chacun accueille une pièce de rétention (28).

13. Prothèse dentaire (10) selon l'une des revendications 7 à 12, **caractérisée en ce que** le matériau dentaire (14) est en contact direct avec la pièce de rétention (28) et que l'évidement traverse le matériau de base (18) et/ou que la pièce de rétention est en contact à la fois avec le matériau de base et le matériau dentaire et que l'évidement traverse le matériau de base.

14. Prothèse dentaire (10) selon l'une des revendications 7 à 13, **caractérisée en ce que** les dents de la prothèse (10) sont reliées entre elles au moins partiellement d'un seul tenant par le matériau dentaire (14) en formant une arcade dentaire ou une arcade dentaire partielle.
